# EUROPEAN PATENT APPLICATION

(11) **EP 4 789 893 A1**
(43) Date of publication of application: **12.08.2026**
(21) Application number: 26155150.1
(22) Date of filing: 29.01.2026
(51) Int. Cl.: B60L 1/00, B60L 50/60, B60L 3/00, H02M 1/36

(54) **POWER STORAGE SYSTEM**

(30) Priority: 10.02.2025 JP 2025019894
(71) Applicant: Toyota Jidosha Kabushiki Kaisha, Toyota-shi, Aichi-ken 471-8571 (JP)
(72) Inventor: YAKU, Yoshihiro, TOYOTA-SHI, AICHI-KEN, 471-8571 (JP)
(74) Representative: Cabinet Beau de Loménie

(57) **Abstract**

A control device (80) is configured to perform a precharge process in which a first relay (71) is brought into a conductive state, a third relay (74) is brought into a conductive state, and a second relay (72) is kept in a non-conductive state when a start-up request is provided. The control device (80) is configured to perform a charge process in which the third relay (74) is brought into a non-conductive state and the second relay (72) is brought into a conductive state after a prescribed time determined in advance has elapsed since the precharge process is performed. The control device (80) is configured to control the prescribed time to be longer when the start-up request is a second type of signal than when the start-up request is a first type of signal. The first type of signal is different from the second type of signal.

## Description

### 1. Field of the Invention

The present disclosure relates to a power storage system.

### 2. Description of Related Art

Japanese Unexamined Patent Application Publication No. 2021-093830 (JP 2021-093830 A) describes a power storage system. The power storage system includes a power storage device, a power conversion device, a relay device, and a control device. The power conversion device converts the output from the power storage device and includes a capacitor.

The relay device is provided on a pair of power lines that connects the power storage device and the power conversion device. The relay device includes a first relay, a second relay, and a precharge circuit. The first relay is provided on one of the power lines. The second relay is provided on the other of the power lines. The precharge circuit is connected in parallel with the second relay. The precharge circuit includes a third relay and a limiting resistor. The limiting resistor is connected in series with the third relay.

The control device controls the relay device. The control device performs a precharge process when a system start-up request is provided. In the precharge process, the control device brings the first relay into a conductive state, and brings the third relay into a conductive state while keeping the second relay in a non-conductive state.

The control device performs a charge process after a prescribed time has elapsed since the precharge process is performed. In the charge process, the control device brings the third relay into a non-conductive state, and brings the second relay into a conductive state. This allows the power storage system to charge the capacitor by performing precharge before performing the charge process.

### SUMMARY OF THE INVENTION

In the power storage system described in JP 2021-093830 A, the prescribed time since the precharge process is performed until the charge process is performed is occasionally set to be considerably short, in order to start up the power storage system early. In this case, the power storage system may start the charge process while the capacitor is not sufficiently charged.

An aspect of the present application provides a power storage system. The power storage system includes: a power storage device mounted on a vehicle; a power conversion device configured to convert power output from the power storage device and including a capacitor; a relay device provided on a pair of power lines that connects the power storage device and the power conversion device; and a control device configured to control the relay device. The relay device includes a first relay provided on one of the power lines, a second relay provided on the other of the power lines, and a precharge circuit connected in parallel with the second relay. The precharge circuit includes a third relay and a limiting resistor connected in series with the third relay. The control device is configured to perform a precharge process of bringing the first relay into a conductive state and bringing the third relay into a conductive state while keeping the second relay in a non-conductive state when a request for system start-up is provided, and a charge process of bringing the third relay into a non-conductive state and bringing the second relay into a conductive state after a prescribed time determined in advance has elapsed since the precharge process is performed. The control device is configured to control the prescribed time to be longer when the request for system start-up is a second type of signal than when the request for system start-up is a first type of signal. The first type of signal is different from the second type signal.

The power storage system controls the prescribed time so to be longer when the start-up request is a second type of signal than when the start-up request is a first type of signal. Therefore, when the start-up request is a second type of signal, the power storage system can start the charge process after the capacitor is sufficiently charged.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram illustrating a vehicle including a power storage system according to an embodiment;
FIG. 2 is a table indicating a database stored in a control device according to the embodiment;
FIG. 3 is a flowchart illustrating a series of processes performed by the control device according to the embodiment;
FIG. 4 is a graph indicating the potential of a capacitor at the time when precharge is performed for a first prescribed time according to the embodiment; and
FIG. 5 is a graph indicating the potential of the capacitor at the time when precharge is performed for a second prescribed time according to the embodiment.

### DETAILED DESCRIPTION OF EMBODIMENTS

An embodiment of a power storage system will be described below with reference to the drawings.

### Overview of Vehicle

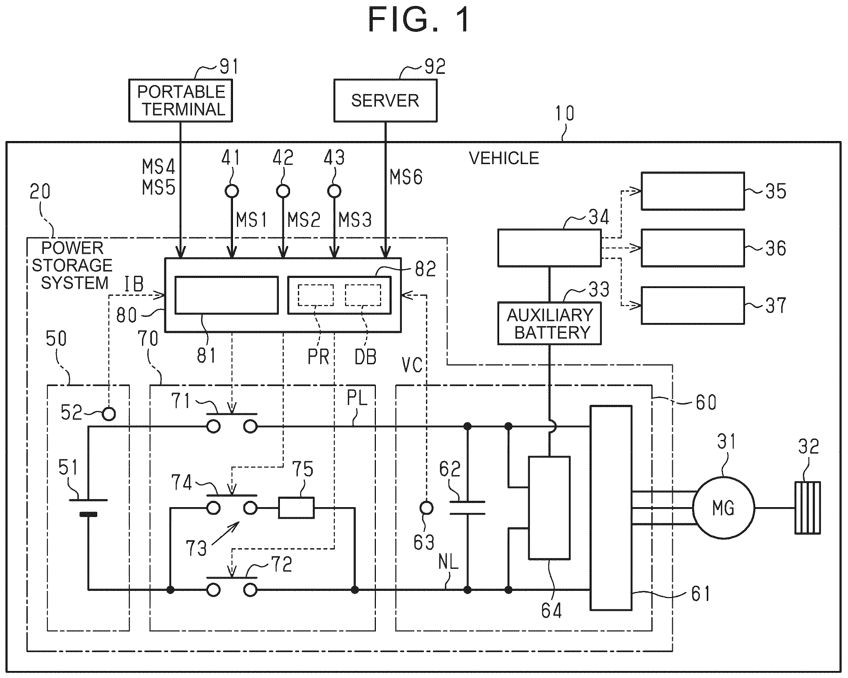

As illustrated in FIG. 1, a vehicle 10 includes a power storage system 20, a motor generator 31, drive wheels 32, an auxiliary battery 33, a vehicle control device 34, an air conditioning device 35, a brake device 36, and a steering device 37.

The power storage system 20 outputs power to the motor generator 31. The motor generator 31 drives the drive wheels 32 using the power input from the power storage system 20. The auxiliary battery 33 stores power input from the power storage system 20. The auxiliary battery 33 is a power source for the vehicle control device 34.

The vehicle control device 34 operates using power supplied from the auxiliary battery 33. The vehicle control device 34 controls the air conditioning device 35. The vehicle control device 34 is an in-vehicle computer. The air conditioning device 35 is mounted on the vehicle 10. The air conditioning device 35 adjusts the temperature in a cabin of the vehicle 10.

The vehicle control device 34 controls the brake device 36. The brake device 36 is a device that applies a braking force to the vehicle 10.
The vehicle control device 34 controls the steering device 37. The steering device 37 is a device that adjusts the steering angle of the vehicle 10.

The vehicle control device 34 controls the motor generator 31. The motor generator 31 is a drive source for the vehicle 10. The motor generator 31 is a device that applies a driving force to the vehicle 10.

The brake device 36, the steering device 37, and the motor generator 31 constitute an actuator system for implementing autonomous driving of the vehicle 10. The vehicle control device 34 controls the actuator system so as to perform the autonomous driving. For example, the vehicle control device 34 controls the actuator system so as to perform automatic parking as the autonomous driving.

The vehicle 10 includes a start switch 41, an air conditioning switch 42, and a power supply switch 43. When the start switch 41 is operated while the power storage system 20 is in the off state, the start switch 41 outputs a first signal MS1 to the power storage system 20 as a start-up request SR for bringing the vehicle 10 into a travelable state. The first signal MS1 includes information indicating that the first signal MS1 is the start-up request SR and identification information for identifying the first signal MS1. The start-up request SR indicates a request to start up the power storage system 20.

When the air conditioning switch 42 is operated while the power storage system 20 is in the off state, the air conditioning switch 42 outputs a second signal MS2 to the power storage system 20 as a start-up request SR for starting the air conditioning device 35. The second signal MS2 includes information indicating that the second signal MS2 is the start-up request SR and identification information for identifying the second signal MS2.

When the power supply switch 43 is operated while the power storage system 20 is in the off state, the power supply switch 43 outputs a third signal MS3 to the power storage system 20 as a start-up request SR for starting power supply from the power storage device 50 to an external device of the vehicle 10. The third signal MS3 includes information indicating that the third signal MS3 is the start-up request SR and identification information for identifying the third signal MS3. The external device of the vehicle 10 is, for example, an emergency lighting device.

The vehicle 10 can communicate with a portable terminal 91 that is external to the vehicle 10 via a wireless communication line. The vehicle 10 acquires a fourth signal MS4 from the portable terminal 91 as a start-up request SR for starting automatic parking. That is, the fourth signal MS4 is a start-up request SR for performing remote parking. The fourth signal MS4 acquired by the vehicle 10 is input to the power storage system 20. The fourth signal MS4 includes information indicating that the fourth signal MS4 is the start-up request SR and identification information for identifying the fourth signal MS4.

The vehicle 10 acquires a fifth signal MS5 from the portable terminal 91 as a start-up request SR for starting the air conditioning device 35. That is, the fifth signal MS5 is a start-up request SR for performing remote air conditioning. The fifth signal MS5 acquired by the vehicle 10 is input to the power storage system 20. The fifth signal MS5 includes information indicating that the fifth signal MS5 is the start-up request SR and identification information for identifying the fifth signal MS5.

The vehicle 10 can communicate with a server 92 that is external to the vehicle 10 via a wireless communication line. The vehicle 10 acquires, from the server 92, a sixth signal MS6 that indicates a start-up request for performing a software update of an in-vehicle computer. The sixth signal MS6 acquired by the vehicle 10 is input to the power storage system 20. The software update is achieved over the air (OTA). The sixth signal MS6 is, for example, a request for one of downloading of update data for updating a program stored in the vehicle control device 34, installation of the update data, and activation of the update data. The sixth signal MS6 includes information indicating that the sixth signal MS6 is the start-up request SR and identification information for identifying the sixth signal MS6.

### Overview of Power Storage System

When the power storage system 20 acquires the start-up request SR while in the off state, the power storage system 20 switches from the off state to the on state. That is, when the power storage system 20 acquires a signal indicating the start-up request SR, the power storage system 20 starts up in order to fulfill the request of each signal. When the power storage system 20 is in the on state, the power storage system 20 can output the stored power.

The power storage system 20 includes a power storage device 50, a power conversion device 60, a relay device 70, and a control device 80.
The power storage device 50 stores power supplied from a power supply facility that is external to the vehicle 10. The power storage device 50 includes a rechargeable battery 51 and a current sensor 52. The battery 51 is, for example, a lithium ion battery. The battery 51 stores power for driving the motor generator 31.

The battery 51 can supply power to the motor generator 31 through the power conversion device 60. When the motor generator 31 generates power, the battery 51 receives the generated power through the power conversion device 60 and is charged.

The battery 51 is connected to the power conversion device 60 by a pair of power lines. The power lines are composed of a positive power line PL and a negative power line NL. One end of the positive power line PL is connected to a positive terminal of the battery 51. One end of the negative power line NL is connected to a negative terminal of the battery 51.

The current sensor 52 detects a battery current IB input to and output from the battery 51. The current sensor 52 is provided on the positive power line PL. The current sensor 52 outputs a detected value to the control device 80. For example, the current sensor 52 detects a discharge current as a positive value and detects a charge current as a negative value.

The power conversion device 60 is a device that converts input power. The power conversion device 60 includes an inverter 61, a capacitor 62, a voltage sensor 63, and a voltage conversion device 64.

The inverter 61 drives the motor generator 31. The inverter 61 is composed of six transistors and six diodes (not illustrated). The diodes are connected in parallel in the reverse direction to the transistors. The six transistors form pairs, one of which on the source side and the other of which on the sink side with respect to the positive power line PL and the negative power line NL. Each of three-phase coils of the motor generator 31 is electrically connected to each of the connection points of the pairs of transistors.

A positive terminal of the capacitor 62 is electrically connected to the positive power line PL. A negative terminal of the capacitor 62 is electrically connected to the negative power line NL.
The voltage sensor 63 detects a capacitor potential VC as the potential of the capacitor 62. The voltage sensor 63 inputs the detected capacitor potential VC to the control device 80.

The voltage conversion device 64 converts an input voltage. The voltage conversion device 64 is electrically connected to the positive power line PL and the negative power line NL in parallel with the capacitor 62. The voltage conversion device 64 converts high-voltage direct-current power input from the power storage device 50 into low-voltage direct-current power. Then, the voltage conversion device 64 outputs the converted low-voltage direct-current power to the auxiliary battery 33.

The relay device 70 is provided on a pair of power lines that connects the power storage device 50 and the power conversion device 60. The relay device 70 includes a first relay 71, a second relay 72, and a precharge circuit 73.

The first relay 71 is a contact relay. The first relay 71 is provided on the positive power line PL as one of the power lines.
The second relay 72 is a contact relay. The second relay 72 is provided on the negative power line NL as the other of the power lines.

The precharge circuit 73 is a circuit that reduces an inrush current that flows when the first relay 71 is energized and the second relay 72 is energized. The precharge circuit 73 is connected to the negative power line NL in parallel with the second relay 72.

The precharge circuit 73 includes a third relay 74 and a limiting resistor 75. The third relay 74 is a contact relay. The limiting resistor 75 is a resistor that reduces the inrush current. When a precharge process to be described later is performed, the capacitor 62 is charged while the current is limited by the limiting resistor 75. This reduces the inrush current flowing from the power storage device 50 to the second relay 72 when the second relay 72 is energized.

When the power storage system 20 is in the on state, the first relay 71 is in a conductive state and the second relay 72 is in a conductive state. When the power storage system 20 is in the off state, at least one of the first relay 71 and the second relay 72 is in a non-conductive state. When the power storage system 20 is in the precharge state, the first relay 71 is in a conductive state, the second relay 72 is in a non-conductive state, and the third relay 74 is in a conductive state.

The control device 80 controls the relay device 70 in order to start up the power storage system 20. The control device 80 includes an execution device 81 and a storage device 82. The execution device 81 is a processor circuit. The storage device 82 is a memory.

The storage device 82 stores a start-up program PR and a database DB. The start-up program PR is a program for causing the execution device 81 to execute a series of processes related to system start-up for starting up the power storage system 20. The database DB includes data that the execution device 81 refers to when starting up the power storage system 20.

### Database

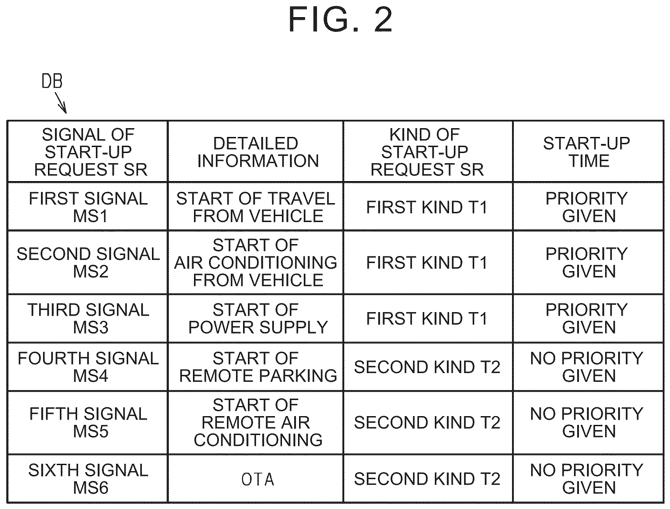

As indicated in FIG. 2, the database DB includes detailed information that indicates details associated with each of the signals indicating the start-up request SR, and information that indicates the type of the start-up request SR. The signals indicating the start-up request SR include the first signal MS1 to the sixth signal MS6.

The detailed information associated with the first signal MS1 indicates that the first signal MS1 is a start-up request SR for bringing the vehicle 10 into a travelable state from the vehicle 10. That is, the first signal MS1 is a start-up request SR issued when it is requested to start travel of the vehicle 10 by operating the start switch 41. The start-up request SR of the first signal MS1 is of a first type T1. The first type T1 is a type of the start-up request SR indicate that priority is given to the start-up time.

The detailed information associated with the second signal MS2 indicates that the second signal MS2 is a start-up request SR from the vehicle 10 to start air conditioning. That is, the second signal MS2 is a start-up request SR issued when it is requested to start the air conditioning device 35 by operating the air conditioning switch 42. The start-up request SR of the second signal MS2 is of the first type T1.

The detailed information associated with the third signal MS3 indicates that the third signal MS3 is a start-up request SR to start power supply to an external device of the vehicle 10. That is, the third signal MS3 is a start-up request SR issued when it is requested to supply power to an external device by operating the power supply switch 43. The start-up request SR of the third signal MS3 is of the first type T1.

The detailed information associated with the fourth signal MS4 indicates that the fourth signal MS4 is a start-up request SR to perform remote parking. That is, the fourth signal MS4 is a start-up request SR issued when it is requested to perform remote parking by operating the portable terminal 91. The start-up request SR of the fourth signal MS4 is of a second type T2. The second type T2 is a type of the start-up request SR indicating that no priority is given to the start-up time.

The detailed information associated with the fifth signal MS5 indicates that the fifth signal MS5 is a start-up request SR to perform remote air conditioning. That is, the fifth signal MS5 is a start-up request SR issued when it is requested to perform remote air conditioning by operating the portable terminal 91. The start-up request SR of the fifth signal MS5 is of the second type T2.

The detailed information associated with the sixth signal MS6 indicates that the sixth signal MS6 is a start-up request SR to perform a software update of the vehicle control device 34 via OTA. That is, the sixth signal MS6 is a start-up request SR issued when it is requested to perform a software update from the server 92. The start-up request SR of the sixth signal MS6 is of the second type T2.

### Series of Processes Related to System Start-up

When the execution device 81 acquires the start-up request SR, the execution device 81 starts the execution of the start-up program PR. That is, when the execution device 81 acquires any of the first signal MS1 to the sixth signal MS6, the execution device 81 starts the execution of the start-up program PR.

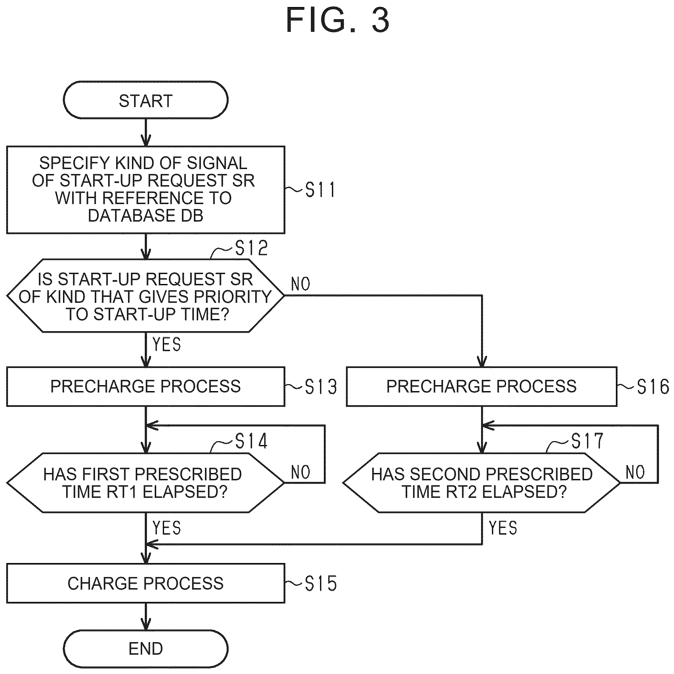

As illustrated in FIG. 3, when the execution device 81 starts the execution of the start-up program PR, the execution device 81 first performs the process in step S11. In step S11, the execution device 81 specifies the type of the signal of the start-up request SR with reference to the database DB.

In detail, the execution device 81 first specifies which of the first signal MS1 to the sixth signal MS6 the acquired signal is, based on the identification information included in the acquired signal. Next, the execution device 81 specifies whether the start-up request SR associated with the acquired signal is of the first type T1 or the second type T2 with reference to the database DB. This allows the execution device 81 to specify the type of the start-up request SR included in the acquired signal. After that, the execution device 81 advances the process to step S12.

In step S12, the execution device 81 determines whether the specified type of the start-up request SR is a type that gives priority to the start-up time. Specifically, the execution device 81 determines whether the specified type of the start-up request SR is the first type T1. When the specified type of the start-up request SR is the first type T1, the execution device 81 determines that the specified type of the start-up request SR is a type that gives priority to the start-up time. When the specified type of the start-up request SR is the first type T1 (S12: YES), the execution device 81 advances the process to step S13.

In step S13, the execution device 81 performs a precharge process. In the precharge process, the execution device 81 controls the relay device 70 so as to bring the first relay 71 into a conductive state, and bring the third relay 74 into a conductive state while keeping the second relay 72 in a non-conductive state. After that, the execution device 81 advances the process to step S14.

In step S14, the execution device 81 determines whether a first prescribed time RT1 determined in advance has elapsed since the precharge process is performed in step S13. The first prescribed time RT1 is determined in advance through testing or simulation as a period of time for which precharge is performed when the start-up request SR of the first type T1 is acquired.

When the first prescribed time RT1 has not elapsed since the precharge process is performed (S14: NO), the execution device 81 repeats the process in step S14. On the other hand, when the first prescribed time RT1 has elapsed since the precharge process is performed (S14: YES), the execution device 81 advances the process to step S15.

In step S15, the execution device 81 performs a charge process. In the charge process, the execution device 81 controls the relay device 70 so as to bring the second relay 72 into a conductive state and bring the third relay 74 into a non-conductive state while keeping the first relay 71 in a conductive state. Consequently, the power storage system 20 is brought into the on state to be started up. After that, the execution device 81 ends the current series of processes.

When the specified type of the start-up request SR is the second type T2 (S12: NO), the execution device 81 advances the process to step S16. In step S16, the execution device 81 performs a precharge process. The process in step S16 is the same as the process in step S14. After the execution device 81 performs the precharge process, the execution device 81 advances the process to step S17.

In step S17, the execution device 81 determines whether a second prescribed time RT2 determined in advance has elapsed since the precharge process is performed in step S16. The second prescribed time RT2 is determined in advance through testing or simulation as a period of time for which precharge is performed when the start-up request SR of the second type T2 is acquired. The second prescribed time RT2 is longer than the first prescribed time RT1. That is, the control device 80 controls the period of time for which precharge is performed when the start-up request SR of the second type T2 is acquired so as to be longer than the period of time for which precharge is performed when the start-up request SR of the first type T1 is acquired.

When the second prescribed time RT2 has not elapsed since the precharge process is performed (S17: NO), the execution device 81 repeats the process in step S17. On the other hand, when the second prescribed time RT2 has elapsed since the precharge process is performed (S17: YES), the execution device 81 advances the process to step S15. When the execution device 81 performs the charge process in step S15, the execution device 81 ends the current series of processes.

In this way, when the start-up request SR is provided, the control device 80 performs a precharge process, and performs a charge process after the first prescribed time RT1 or the second prescribed time RT2 has elapsed since the precharge process is performed. The control device 80 controls the second prescribed time RT2 so as to be longer than the first prescribed time RT1.

### Functions of Present Embodiment

The capacitor potential VC as the potential of the capacitor 62 at the time when the power storage system 20 is started up after acquiring the start-up request SR of the first type T1 will be described.

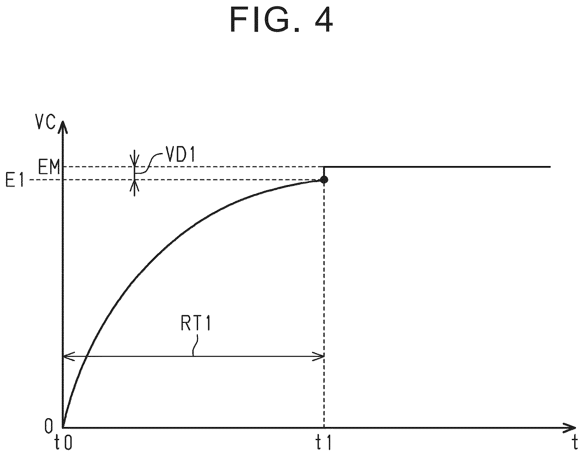

As indicated in FIG. 4, when the execution device 81 acquires the start-up request SR of the first type T1, the execution device 81 performs a precharge process at time t0. At time t0, the capacitor potential VC is zero. When precharge is performed from time t0, the capacitor potential VC gradually increases.

At time t1, which is the first prescribed time RT1 after time t0, the capacitor potential VC is a first potential E1. That is, the capacitor potential VC is brought to the first potential E1 by precharge for the first prescribed time RT1.

After time t1, the execution device 81 performs a charge process. Consequently, the capacitor potential VC is brought to a start-up potential EM as the output voltage of the battery 51. Therefore, when the second relay 72 is brought into a conductive state by the charge process, the potential difference between the start-up potential EM after a conductive state is established and the first potential E1 before a conductive state is established is a first potential difference VD1.

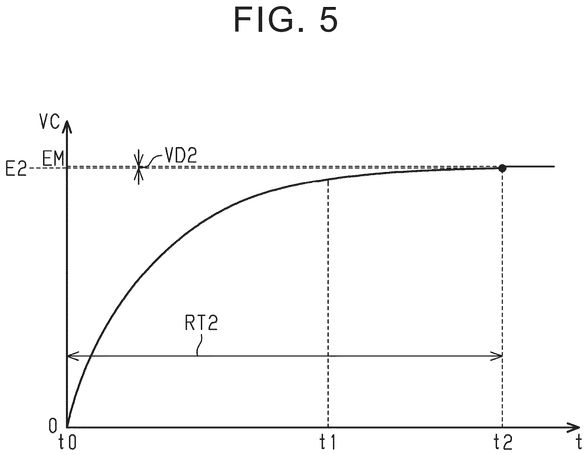

As indicated in FIG. 5, when the execution device 81 acquires the start-up request SR of the second type T2, the execution device 81 performs a precharge process at time t0. At time t0, the capacitor potential VC is zero. When precharge is performed from time t0, the capacitor potential VC gradually increases.

At time t2, which is the second prescribed time RT2 after time t0, the capacitor potential VC is a second potential E2 that is higher than the first potential E1. That is, the capacitor potential VC is brought to the second potential E2 by precharge for the second prescribed time RT2.

After time t2, the execution device 81 performs a charge process. Consequently, the capacitor potential VC is brought to the start-up potential EM. Therefore, when the second relay 72 is brought into a conductive state by the charge process, the potential difference between the start-up potential EM after a conductive state is established and the second potential E2 before a conductive state is established is a second potential difference VD2.

Here, as the potential difference between the start-up potential EM after a conductive state is established and the capacitor potential VC before a conductive state is established is larger, the current that flows through the second relay 72 when the second relay 72 is brought into a conductive state is larger. As the current that flows through the second relay 72 is larger, the stress applied to the second relay 72 is larger.

The second potential difference VD2 is smaller than the first potential difference VD1. Therefore, the stress applied to the second relay 72 when the charge process is performed through step S17 is smaller than the stress applied to the second relay 72 when the charge process is performed through step S14.

When the start-up request SR of the first type T1 is acquired, the power storage system 20 is started up at time t1. On the other hand, when the start-up request SR of the second type T2 is acquired, the power storage system 20 is started up at time t2. Therefore, the timing at which the power storage system 20 is started up when the start-up request SR of the first type is acquired is earlier than the timing at which the power storage system 20 is started up when the start-up request SR of the second type is acquired. That is, the start-up time at the time when the charge process is performed through step S14 is shorter than the start-up time at the time when the charge process is performed through step S17.

### Effects of Present Embodiment

A power storage system 20 includes a power storage device 50, a power conversion device 60, a relay device 70, and a control device 80. The power storage device 50 is mounted on a vehicle 10. The power conversion device 60 converts power from the power storage device 50 and includes a capacitor 62. The relay device 70 is provided on a pair of power lines that connects the power storage device 50 and the power conversion device 60. The control device 80 controls the relay device 70. The relay device 70 includes a first relay 71, a second relay 72, and a precharge circuit 73. The first relay 71 is provided on one of the power lines. The second relay 72 is provided on the other of the power lines. The precharge circuit 73 is connected in parallel with the second relay 72. The precharge circuit 73 includes a third relay 74 and a limiting resistor 75. The limiting resistor 75 is connected in series with the third relay 74. The control device 80 performs a precharge process and a charge process. In the precharge process, when a start-up request SR is provided, the first relay 71 is brought into a conductive state and the third relay 74 is brought into a conductive state while the second relay 72 is kept in a non-conductive state. In the charge process, the third relay 74 is brought into a non-conductive state and the second relay 72 is brought into a conductive state after a first prescribed time RT1 or a second prescribed time RT2 has elapsed since the precharge process is performed. The second prescribed time RT2 at the time when the start-up request SR is a signal of a second type T2 that is different from a signal of a first type T1 is controlled so as to be longer than the first prescribed time RT1 at the time when the start-up request SR is a signal of the first type T1.

In the power storage system 20, the second prescribed time RT2 for which precharge is performed when the start-up request SR is a signal of the second type T2 is longer than the first prescribed time RT1 for which precharge is performed when the start-up request SR is a signal of the first type T1. Therefore, when the start-up request SR is a signal of the second type T2, the power storage system 20 can sufficiently charge the capacitor 62 compared to when the start-up request SR is a signal of the first type T1.

Therefore, the power storage system 20 can make the potential difference between the start-up potential EM and the potential after precharge smaller when the start-up request SR is a signal of the second type T2 than when the start-up request SR is a signal of the first type T1. As a result, the stress applied to the second relay 72, which is brought into a conductive state through the charge process, can be made smaller when the start-up request SR is a signal of the second type T2 than when the start-up request SR is a signal of the first type T1.

The signal of the first type T1 includes a start-up request SR for bringing the vehicle 10 into a travelable state. When a start-up request SR for bringing the vehicle 10 into a travelable state is provided, the power storage system 20 can suppress the precharge time becoming excessively long. Therefore, the power storage system 20 can suppress the user of the vehicle 10 feeling uncomfortable due to the increase in time before the vehicle 10 is brought into a travelable state.

The signal of the first type T1 includes a start-up request SR for starting the air conditioning device 35 from the vehicle 10. When a start-up request SR for starting the air conditioning device 35 from the vehicle 10 is provided, the power storage system 20 can suppress the precharge time becoming excessively long. Therefore, the power storage system 20 can suppress the user of the vehicle 10 feeling uncomfortable due to the increase in time before the air conditioning device 35 is started.

The signal of the first type T1 includes a start-up request SR for starting power supply from the power storage device 50 to an external device of the vehicle 10. When a start-up request SR for starting power supply from the power storage device 50 to an external device is provided, the power storage system 20 can suppress the precharge time becoming excessively long. Therefore, the power storage system 20 can suppress the user of the vehicle 10 feeling uncomfortable due to the increase in time before the power supply is started.

The signal of the second type T2 includes a start-up request SR for starting automatic parking from the outside of the vehicle 10. When a start-up request SR for starting automatic parking from the outside of the vehicle 10 is provided, the power storage system 20 can suppress the capacitor 62 being insufficiently charged.

On the other hand, since it is highly likely that the user of the vehicle 10 stays outside the vehicle 10, the user is unlikely to feel uncomfortable even when it takes a long time for automatic parking to be started. Accordingly, the power storage system 20 can easily suppress the user of the vehicle 10 feeling uncomfortable even when the precharge time is extended.

The signal of the second type T2 includes a start-up request SR for starting the air conditioning device 35 mounted on the vehicle 10 from the outside of the vehicle 10. When a start-up request SR for starting the air conditioning device 35 from the outside of the vehicle 10 is provided, the power storage system 20 can suppress the capacitor 62 being insufficiently charged.

On the other hand, since it is highly likely that the user of the vehicle 10 stays outside the vehicle 10, the user is unlikely to feel uncomfortable even when it takes a long time for the air conditioning device 35 to be started. Accordingly, the power storage system 20 can easily suppress the user of the vehicle 10 feeling uncomfortable even when the precharge time is extended.

The signal of the second type T2 includes a start-up request for performing a software update of the vehicle control device 34, as an in-vehicle computer mounted on the vehicle 10, from the outside of the vehicle 10. When a software update is to be performed, the power storage system 20 is started up in order to charge the auxiliary battery 33 so that the power supplied to the vehicle control device 34 is not insufficient.

When a start-up request SR for performing a software update of the vehicle control device 34 from the outside of the vehicle 10 is provided, the power storage system 20 can suppress the capacitor 62 being insufficiently charged.

On the other hand, since the software update does not depend on the operation by the user of the vehicle 10, the user is unlikely to feel uncomfortable even when it takes a long time to start the software update. Accordingly, the power storage system 20 is unlikely to make the user of the vehicle 10 feel uncomfortable even when the precharge time is extended.

The signal of the first type T1 gives priority to the start-up time, whereas the signal of the second type T2 gives no priority to the start-up time. Therefore, the power storage system 20 can shorten the start-up time during system start-up in which priority is given to the start-up time, and can reduce the stress applied to the second relay 72 during system start-up in which no priority is given to the start-up time.

### Modifications

The above embodiments can be implemented with the following modifications. The above embodiment and the following modifications can be combined as long as no technical contradiction arises.

The vehicle 10 is not limited to a battery electric vehicle. For example, the vehicle 10 may be a plug-in hybrid electric vehicle. The vehicle 10 may be equipped with the power storage system 20. The auxiliary battery 33 may be included in the power conversion device 60.

The vehicle control device 34 may be composed of a plurality of computers. In this case, a computer that controls the air conditioning device 35 and a computer that performs automatic parking may be different from each other.

The actuator system that implements remote parking is not limited to the steering device 37 and the brake device 36. For example, the actuator system may further include a camera.

The power storage device 50 may include at least the battery 51. The power conversion device 60 does not necessarily include the voltage conversion device 64.

The switch for acquiring the start-up request SR is not limited to the examples in the above embodiment. For example, the start-up request SR may be output to the control device 80 by operating the in-vehicle display.

The control device 80 may be configured as circuitry that includes one or more processors that execute various processes according to a computer program (software). The control device 80 may be configured as one or more dedicated hardware circuits, such as application specific integrated circuits (ASICs), that execute at least a part of the various processes, or a circuit that includes a combination of such circuits. The processor includes a CPU and a memory such as a RAM and a ROM. The memory stores program codes or instructions configured to cause the CPU to execute the processes. The memory, that is, a computer-readable medium, includes any available medium that is accessible by a general-purpose or special-purpose computer. The same applies to the vehicle control device 34.

The information included in the database DB is not limited to the examples in the above embodiment. The database DB does not need to include the detailed information. Furthermore, when each of the first signal MS1 to the sixth signal MS6 includes information indicating whether the signal is of the first type T1 or of the second type T2, the storage device 82 does not need to store the database DB.

### First Type Signal and Second Type Signal

The signal of the first type T1 does not need to include a start-up request SR for bringing the vehicle 10 into a travelable state.

The signal of the first type T1 does not need to include a start-up request SR for starting the air conditioning device 35 mounted on the vehicle 10 from the vehicle 10. The signal of the first type T1 does not need to include a start-up request SR for starting power supply from the power storage device 50 to an external device of the vehicle 10.

The signal of the second type T2 does not need to include a start-up request SR for starting automatic parking from the outside of the vehicle 10. The signal of the second type T2 does not need to include a start-up request SR for starting the air conditioning device 35 mounted on the vehicle 10 from the outside of the vehicle 10.

The signal of the second type T2 does not need to include a start-up request SR for performing a software update of the vehicle control device 34, as an in-vehicle computer mounted on the vehicle 10, from the outside of the vehicle 10.

In addition to the signal of the first type T1 and the signal of the second type T2, other types of signals may be set. The signal of the first type T1 and the signal of the second type T2 may be start-up requests SR that are different from each other. For example, when the signal of the second type T2 includes the sixth signal MS6, the signal of the first type T1 may include a signal that is different from the sixth signal MS6.

### First Prescribed Time and Second Prescribed Time

The first prescribed time RT1 and the second prescribed time RT2 do not have to be fixed values. For example, the first prescribed time RT1 and the second prescribed time RT2 may be calculated based on the battery current IB. Specifically, the execution device 81 may calculate the time until the battery current IB reaches a first current value as the first prescribed time RT1, and calculate the time until the battery current IB reaches a second current value that is less than the first current value as the second prescribed time RT2.

Furthermore, for example, the first prescribed time RT1 and the second prescribed time RT2 may be calculated based on the capacitor potential VC. Specifically, the execution device 81 may calculate the time until the capacitor potential VC reaches the first potential E1 as the first prescribed time RT1, and calculate the time until the capacitor potential VC reaches the second potential E2 as the second prescribed time RT2.

### Appendix

Technical ideas that can be understood from the above embodiment and modifications are described below.

### Appendix 1

A power storage system includes a power storage device mounted on a vehicle; a power conversion device configured to convert power from the power storage device, the power conversion device including a capacitor; a relay device provided on a pair of power lines that connects the power storage device and the power conversion device; and a control device configured to control the relay device, wherein: the relay device includes a first relay provided on one of the power lines, a second relay provided on the other of the power lines, and a precharge circuit connected in parallel with the second relay; the precharge circuit includes a third relay and a limiting resistor connected in series with the third relay; the control device is configured to perform a precharge process of bringing the first relay into a conductive state, bringing the third relay into the conductive state, and keeping the second relay in a non-conductive state when a start-up request for system start-up is provided, and a charge process of bringing the third relay into the non-conductive state and bringing the second relay into the conductive state after a prescribed time determined in advance has elapsed since the precharge process is performed; and the control device is configured to control the prescribed time to be longer when the start-up request is a second type of signal than when the start-up request is a first type of signal, the first type of signal being different from the second type of signal.

### Appendix 2

The power storage system according to Appendix 1, wherein the first type of signal includes the start-up request for bringing the vehicle into a travelable state from the vehicle.

### Appendix 3

The power storage system according to Appendix 1 or 2, wherein the first type of signal includes the start-up request for starting an air conditioning device mounted on the vehicle from the vehicle.

### Appendix 4

The power storage system according to any one of Appendix 1 to 3, wherein the first type of signal includes the start-up request for starting power supply from the power storage device to an external device of the vehicle.

### Appendix 5

The power storage system according to any one of Appendix 1 to 4, wherein the second type of signal includes the start-up request for starting automatic parking from outside of the vehicle.

### Appendix 6

The power storage system according to any one of Appendix 1 to 5, wherein the second type of signal includes the start-up request for starting an air conditioning device mounted on the vehicle from outside of the vehicle.

### Appendix 7

The power storage system according to any one of Appendix 1 to 6, wherein the second type of signal includes the start-up request for performing a software update of an in-vehicle computer mounted on the vehicle from outside of the vehicle.

## Claims

1. A power storage system (20) comprising:
a power storage device (50) configured to be mounted on a vehicle (10);
a power conversion device (60) configured to convert power from the power storage device (50), the power conversion device (60) including a capacitor (62);
a relay device (70) provided on a pair of power lines that connects the power storage device (50) and the power conversion device (60); and
a control device (80) configured to control the relay device (70), wherein:
the relay device (70) includes a first relay (71) provided on one of the power lines, a second relay (72) provided on the other of the power lines, and a precharge circuit (73) connected in parallel with the second relay (72);
the precharge circuit (73) includes a third relay (74) and a limiting resistor (75) connected in series with the third relay (74);
the control device (80) is configured to perform
a precharge process of bringing the first relay (71) into a conductive state, bringing the third relay (74) into the conductive state, and keeping the second relay (72) in a non-conductive state when a start-up request for system start-up is provided, and
a charge process of bringing the third relay (74) into the non-conductive state and bringing the second relay (72) into the conductive state after a prescribed time determined in advance has elapsed since the precharge process is performed; and
the control device (80) is configured to control the prescribed time to be longer when the start-up request is a second type of signal than when the start-up request is a first type of signal, the first type of signal being different from the second type of signal.

2. The power storage system (20) according to claim 1, wherein the first type of signal includes the start-up request for bringing the vehicle (10) into a travelable state from the vehicle (10).

3. The power storage system (20) according to any one of claims 1 or 2, wherein the first type of signal includes the start-up request for starting an air conditioning device (35) mounted on the vehicle (10) from the vehicle (10).

4. The power storage system (20) according to any one of claims 1 to 3, wherein the first type of signal includes the start-up request for starting power supply from the power storage device (50) to an external device of the vehicle (10).

5. The power storage system (20) according to any one of claims 1 to 4, wherein the second type of signal includes the start-up request for starting automatic parking from outside of the vehicle (10).

6. The power storage system (20) according to any one of claims 1 to 5, wherein the second type of signal includes the start-up request for starting an air conditioning device (35) mounted on the vehicle (10) from outside of the vehicle (10).

7. The power storage system (20) according to any one of claims 1 to 6, wherein the second type of signal includes the start-up request for performing a software update of an in-vehicle computer mounted on the vehicle (10) from outside of the vehicle (10).
